# FASCICULE DE BREVET EUROPEEN

(11) **EP 2 637 887 B1**
(45) Date de publication et mention de la délivrance du brevet: **11.02.2015**
(21) Numéro de dépôt: 11788544.2
(22) Date de dépôt: 09.11.2011
(51) Int. Cl.: B60K 35/00, B60R 11/02, G06F 1/16, G06F 3/01, G06F 3/041, B29C 45/14

(54) **MODULE DE COMMANDE ET D'AFFICHAGE POUR VEHICULE AUTOMOBILE ET PROCEDE DE FABRICATION CORRESPONDANT**
STEUER- UND ANZEIGEMODUL FÜR EIN KRAFTFAHRZEUG SOWIE ENTSPRECHENDES HERSTELLUNGSVERFAHREN
CONTROL AND DISPLAY MODULE FOR MOTOR VEHICLE AND CORRESPONDING METHOD OF MANUFACTURE

(30) Priorité: 10.11.2010 FR 1004403
(43) Date de publication de la demande: 18.09.2013
(73) Titulaire: Valeo Systemes Thermiques, 78320 Le Mesnil Saint Denis (FR)
(72) Inventeur: HUYNH, Tan, Duc, F-93330 Neuilly sur Marne (FR)
(74) Mandataire: Pothmann, Karsten
(86) Numéro de dépôt international: PCT/FR2011/000596
(87) Numéro de publication internationale: WO 2012/062980

(56) Documents cités:
- WO-A2-2008/062217
- DE-A1-102006 012 147
- US-A1- 2010 085 692

## Description

La présente invention concerne un module de commande et d'affichage à surface tactile pour véhicule automobile. Plus précisément, un tel module trouve une application avantageuse pour les commandes situées à proximité du conducteur, au niveau du panneau de bord ou de la console avant d'un véhicule automobile pour par exemple commander des fonctions de climatisation, d'un système audio, d'un système de téléphonie, d'un système multimédia ou encore d'un système de navigation. L'invention concerne également un procédé de fabrication d'un tel module de commande et d'affichage.

Un module comprenant toutes les caractéristiques du préambule de la revendication 1 est connu du document DE 10 2006 012147 A1.

Les dispositifs de commande et d'affichage de véhicule automobile comportent un écran pour l'affichage de données d'information ou de commandes. Ces écrans peuvent être recouverts d'une dalle tactile transparente permettant la saisie de commandes par les utilisateurs du véhicule.

La dalle tactile permet de déterminer les coordonnées de l'appui d'un doigt d'utilisateur en utilisant par exemple la technologie capacitive.

Les dalles tactiles sont des éléments minces et fragiles, dont la surface de commande dépasse l'écran qu'elles recouvrent, laissant apparaître des bords saillants nécessitant d'être protégés et dissimulés. Pour cela, des cadres de protection sont disposés tout autour des dalles tactiles, cachant les bords en formant une bordure en relief.

En outre, les constructeurs automobiles cherchent aujourd'hui à rendre les façades de véhicule plus ergonomiques pour l'utilisateur en proposant des modules de commande et d'affichage d'aspect lisse et uniforme au toucher.

L'invention propose donc un module de commande et d'affichage amélioré pour véhicule automobile et un procédé de fabrication d'un tel module permettant d'obtenir une façade d'aspect lisse et uniforme au toucher.

A cet effet, la présente invention a pour objet un module de commande et d'affichage pour véhicule automobile comportant :
- un écran pour l'affichage de données,
- une dalle tactile capacitive pour la saisie de commandes par un utilisateur, ladite dalle tactile capacitive superposant ledit écran,
- une façade de commande dans laquelle est logé ledit écran,
caractérisé en ce qu'il comporte en outre un cadre moulé périphérique à ladite dalle tactile capacitive, présentant des moyens de fixations à ladite façade de commande et en ce que ledit cadre moulé est surmoulé d'une vitre transparente, ladite dalle tactile capacitive étant collée à l'arrière de ladite vitre transparente.

L'avantage d'un cadre obtenu par moulage est que l'on peut facilement réaliser une forme particulière présentant d'une part, des moyens de fixations à la façade de commande et d'autre part, un profil adapté permettant un ressenti lisse pour l'utilisateur. Ces fonctions intégrées dans le cadre sont difficilement réalisables avec du verre. Ainsi, le cadre moulé protège et cache les bords de la dalle tactile capacitive de sorte que l'utilisateur ne perçoit qu'une surface lisse et uniforme au toucher, sans aspérités ou renflements, le glissement du doigt sur la frontière entre la dalle tactile capacitive et la bordure de la façade de commande n'étant pas perceptible et pouvant en outre être rendu invisible par le choix du coloris utilisé, donnant l'impression d'une surface continue.

En outre, lorsque le module de commande et d'affichage n'est pas alimenté, la surface apparaît totalement noire grâce au cadre moulé opaque et à la teinte sombre de l'écran.

Selon une ou plusieurs caractéristiques du module de commande et d'affichage prise seule ou en combinaison,
- ledit cadre moulé comporte un matériau thermoplastique opaque,
- ledit cadre moulé présente une paroi arrondie entre les bords de la dalle tactile capacitive et une bordure de la façade de commande,
- les moyens de fixation du cadre moulé sont amovibles,
- ladite paroi arrondie du cadre moulé s'étend par au moins deux pattes élastiques s'encliquetant dans des trous correspondants de la façade de commande,
- ledit cadre moulé présente une surface filetée s'insérant dans un pas de vis complémentaire de la façade de commande,
- ledit module de commande et d'affichage comporte une colle de matériau diélectrique entre la vitre transparente et la dalle tactile capacitive,
- la vitre transparente comporte un matériau polycarbonate,
- ledit module de commande et d'affichage comporte un vernis superposant la vitre transparente.

L'invention a aussi pour objet un procédé de fabrication d'un module de commande et d'affichage tel que décrit précédemment, caractérisé en ce que :
- on surmoule le cadre moulé d'une vitre transparente,
- on colle ladite dalle tactile capacitive à l'arrière de la vitre transparente, et
- on fixe l'ensemble comprenant le cadre moulé, la vitre transparente surmoulée sur le cadre moulé et la dalle tactile capacitive collée à l'arrière de la vitre transparente dans la façade de commande:

D'autres caractéristiques et avantages de l'invention ressortiront de la description suivante, donnée à titre d'exemple, sans caractère limitatif, en regard des dessins annexés sur lesquels :
- la figure 1 représente une vue schématique en coupe de côté d'un module de commande et d'affichage,
- la figure 2 représente une vue en éclaté et en perspective du module de commande et d'affichage de la figure 1,
- la figure 3 représente un organigramme d'un procédé de fabrication d'un module de commande et d'affichage, et
- la figure 4 représente une étape du procédé de fabrication du module de commande et d'affichage de la figure 3.

Sur ces figures, les éléments identiques portent les mêmes numéros de référence. Pour plus de clarté, les étapes de procédé sont numérotées à partir de 100.

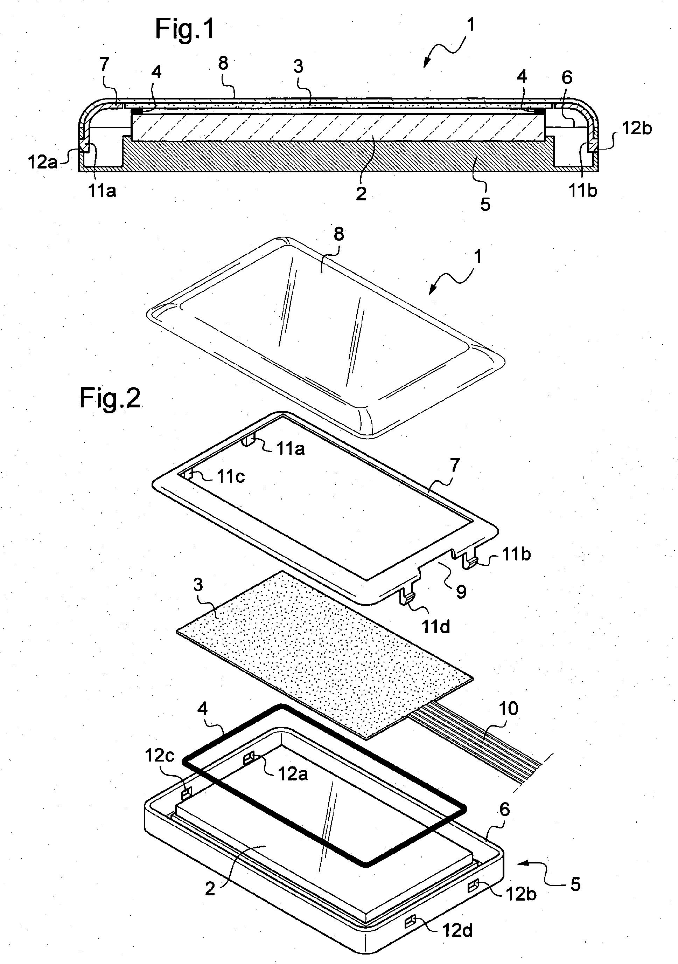

Le module de commande et d'affichage 1 représenté sur les figures 1 et 2 peut être fixé à proximité de l'utilisateur, par exemple au niveau de la console centrale du véhicule ou au niveau du panneau de bord (non représenté) pour par exemple commander des fonctions de climatisation, d'un système audio, d'un système de téléphonie, d'un système multimédia ou encore d'un système de navigation.

Le module de commande et d'affichage 1 comporte un écran 2, pour l'affichage de données d'information ou de commandes, une dalle tactile capacitive 3 présentant une surface de commande pour la saisie de commandes par un utilisateur, la surface de commande étant au moins superposée à l'écran 2, et une façade de commande 5 logeant l'écran 2. Dans l'exemple représenté sur les figures, la dalle tactile capacitive 3 recouvre l'écran 2 en dépassant sur les côtés de l'écran 2.

Le module de commande et d'affichage 1 peut comporter un joint élastomère 4, en forme de cadre, interposé entre l'écran 2 et la dalle tactile capacitive 3.

La dalle tactile capacitive 3 est transparente pour être placée sur l'écran 2 et servir de moyen de saisie. La dalle tactile capacitive 3 est par exemple en verre et comporte par exemple un matériau d'ITO (Oxyde d'indium-étain), tel qu'en couches minces, permettant à la fois une bonne conductivité électrique et une transparence optique. Selon un autre exemple, la dalle tactile capacitive 3 comporte un film transparent.

La dalle tactile capacitive 3 détermine les coordonnées du point où l'utilisateur appuie avec son doigt sur la surface de commande. Le déplacement ou l'appui du doigt d'un utilisateur provoque la création d'un signal variant avec la localisation et le déplacement de son doigt au contact et selon l'étendue sur cette surface.

L'écran 2 comporte par exemple un afficheur TFT (utilisant la technologie de couches minces de transistor ou « Thin film Transistor » en anglais).

L'écran 2 et la dalle tactile capacitive 3 permettent ainsi la saisie de commandes et l'affichage de données correspondantes. Comme mieux visible sur la vue en coupe de côté du module de commande et d'affichage 1 de la figure 1, la façade de commande 5 présente une bordure périphérique 6 autour de l'écran 2.

Le module de commande et d'affichage 1 comporte en outre un cadre moulé 7 périphérique à la dalle tactile capacitive 3 et présentant des moyens de fixations à la bordure 6 de la façade de commande 5. La surface externe (ou supérieure) du cadre moulé 7 est en outre surmoulée d'une vitre transparente 8 et la dalle tactile capacitive 3 est collée à l'arrière de la vitre transparente 8.

Le cadre moulé 7 présente par exemple une paroi arrondie, bombée entre les bords de la dalle tactile capacitive 3 et la bordure 6 de la façade de commande 5. La surface externe du cadre moulé 7 arrondit ainsi les angles de la dalle tactile capacitive 3 avec la façade de commande 5.

En outre, le cadre moulé 7 peut présenter un passage 9 pour une nappe de connexion 10 permettant le câblage des câbles électriques d'alimentation et de sortie de la dalle tactile capacitive 3 (figure 2).

Le cadre moulé 7 comporte par un exemple un matériau thermoplastique opaque, par exemple noir, tel que qu'un polycarbonate ou un matériau PMMA (polyméthacrylate de méthyle).

La vitre transparente 8 comporte par exemple un matériau polycarbonate transparent.

La colle entre la vitre transparente 8 et la dalle tactile capacitive 3 comporte par exemple une couche d'un matériau diélectrique permettant de communiquer les charges capacitives entre la dalle tactile capacitive 3 et la vitre transparente 8.

L'avantage d'un cadre obtenu par moulage est que l'on peut facilement réaliser une forme particulière présentant d'une part, des moyens de fixations à la façade de commande 5 et d'autre part, un profil adapté permettant un ressenti lisse pour l'utilisateur. Ces fonctions intégrées dans le cadre sont difficilement réalisables avec du verre. Ainsi, le cadre moulé 7 protège et cache les bords de la dalle tactile capacitive 3 de sorte que l'utilisateur ne perçoit qu'une surface lisse et uniforme au toucher, sans aspérités ou renflements, le glissement du doigt sur la frontière entre la dalle tactile capacitive 3 et la bordure 6 de la façade de commande 5 n'étant pas perceptible et pouvant en outre être rendu invisible par le choix du coloris utilisé, donnant l'impression d'une surface continue.

En outre, lorsque le module de commande et d'affichage 1 n'est pas alimenté, la surface apparaît totalement noire grâce au cadre moulé 7 opaque et à la teinte sombre de l'écran 2.

Les moyens de fixation du cadre moulé 7 sont par exemple des moyens de fixation amovibles coopérant avec des moyens de fixation amovibles complémentaires de la façade de commande 5.

Les moyens de fixations amovibles et les moyens de fixations amovibles complémentaires sont par exemple des moyens d'encliquetage (ou de clipsage), c'est-à-dire coopérant par déformation élastique.

Par exemple, la paroi arrondie du cadre moulé 7 s'étend par quatre pattes élastiques 11a, 11b, 11c, 11d munies d'ergots s'encliquetant dans quatre trous correspondants 12a, 12b, 12c, 12d de la façade de commande 5, ménagés dans la bordure 6 de la façade de commande 5 pour retenir la patte élastique correspondante du cadre moulé 7.

Selon un autre exemple non représenté mais équivalent des moyens d'encliquetage, la paroi arrondie du cadre moulé s'étend par des pattes élastiques présentant des épaulements s'encliquetant dans des ergots de la façade de commande 5 faisant saillie vers l'intérieur de la façade de commande 5.

Selon un autre exemple de réalisation des moyens de fixations amovibles non représenté, le cadre moulé présente une surface filetée s'insérant dans un pas de vis complémentaire de la façade de commande 5.

Le module de commande et d'affichage 1 peut comporter en outre un vernis de protection ou antireflet ou anti-traces de doigt, superposant la vitre transparente 8.

Au cours de la fabrication d'un module de commande et d'affichage 100, on moule le cadre 7 (étape 101) présentant une paroi arrondie et des pattes de fixation élastiques 11a, 11b, 11c, 11d nécessaires à la fixation à la façade de commande 5.

Puis, on surmoule le cadre moulé 7 d'une vitre transparente 8 au cours d'une deuxième étape 102.

On applique ensuite un vernis sur la vitre transparente 8 au cours d'une troisième étape 103.

Puis, au cours d'une quatrième étape 104, on colle la dalle tactile capacitive 3 à l'arrière de la vitre transparente 8, au centre du cadre moulé 7.

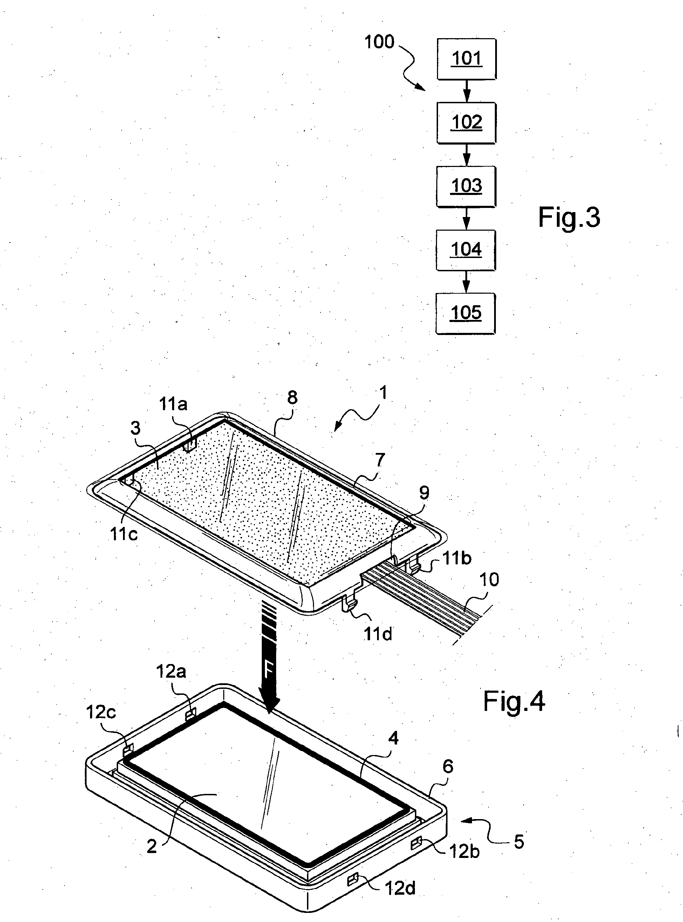

Enfin, au cours d'une cinquième étape 105, on clippe les pattes de fixation élastiques 11a, 11b, 11c, 11d de l'ensemble comprenant le cadre moulé 7, la vitre transparente surmoulée 8 sur le cadre moulé 7 et la dalle tactile capacitive 3 collée à l'arrière de la vitre transparente dans la façade de commande 5, dans les trous correspondants 12a, 12b, 12c, 12d de la façade de commande 5 (voir flèche F sur la figure 4).

## Revendications

1. Module de commande et d'affichage pour véhicule automobile comportant :
- un écran (2) pour l'affichage de données,
- une dalle tactile capacitive (3) pour la saisie de commandes par un utilisateur, ladite dalle tactile capacitive superposant ledit écran (2),
- une façade de commande (5) dans laquelle est logé ledit écran (2),
**caractérisé en ce qu'**il comporte en outre un cadre moulé (7) périphérique à ladite dalle tactile capacitive (3), présentant des moyens de fixations à ladite façade de commande (5) et **en ce que** ledit cadre moulé (7) est surmoulé d'une vitre transparente (8), ladite dalle tactile capacitive (3) étant collée à l'arrière de ladite vitre transparente (8).

2. Module de commande et d'affichage selon la revendication 1, **caractérisé en ce que** ledit cadre moulé (7) comporte un matériau thermoplastique opaque.

3. Module de commande et d'affichage selon l'une des revendications 1 ou 2, **caractérisé en ce que** ledit cadre moulé (7) présente une paroi arrondie entre les bords de la dalle tactile capacitive (3) et une bordure (6) de la façade de commande (5).

4. Module de commande et d'affichage selon l'une des revendications 1 à 3, **caractérisé en ce que** les moyens de fixation du cadre moulé (7) sont amovibles.

5. Module de commande et d'affichage selon les revendications 3 et 4, **caractérisé en ce que** ladite paroi arrondie du cadre moulé (7) s'étend par au moins deux pattes élastiques (11a, 11b, 11c, 11d) s'encliquetant dans des trous correspondants (12a, 12b, 12c, 12d) de la façade de commande (5).

6. Module de commande et d'affichage selon la revendication 4, **caractérisé en ce que** ledit cadre moulé (7) présente une surface filetée s'insérant dans un pas de vis complémentaire de la façade de commande (5).

7. Module de commande et d'affichage selon l'une des revendications précédentes, **caractérisé en ce qu'**il comporte une colle de matériau diélectrique entre la vitre transparente (8) et la dalle tactile capacitive (3).

8. Module de commande et d'affichage selon l'une des revendications précédentes, **caractérisé en ce que** la vitre transparente (8) comporte un matériau polycarbonate.

9. Module de commande et d'affichage selon l'une des revendications précédentes, **caractérisé en ce qu'**il comporte un vernis superposant la vitre transparente (8).

10. Procédé de fabrication d'un module de commande et d'affichage selon l'une des revendications précédentes, **caractérisé en ce que** :
- on surmoule le cadre moulé d'une vitre transparente (102),
- on colle ladite dalle tactile capacitive à l'arrière de la vitre transparente (étape 104), et
- on fixe l'ensemble comprenant le cadre moulé, la vitre transparente surmoulée sur le cadre moulé et la dalle tactile capacitive collée à l'arrière de la vitre transparente dans la façade de commande (étape 105)

## Patentansprüche

1. Steuer- und Anzeigemodul für Kraftfahrzeug, das Folgendes umfasst:
- einen Bildschirm (2) für die Anzeige von Daten,
- eine kapazitive berührungsempfindliche Platte (3) für die Erfassung von Befehlen von einem Anwender, wobei die kapazitive berührungsempfindliche Platte dem Bildschirm (2) überlagert ist,
- ein Steuergehäuse (5), in dem der Bildschirm (2) untergebracht ist,
**dadurch gekennzeichnet**, das es außerdem einen gegossenen Umfangsrahmen (7) um die kapazitive berührungsempfindliche Platte (3) umfasst, der Mittel für die Befestigung am Steuergehäuse (5) aufweist, und dass der gegossene Rahmen (7) mit einer lichtdurchlässigen Scheibe (8) übergossen ist, wobei die kapazitive berührungsempfindliche Platte (3) hinter die lichtdurchlässige Scheibe (8) geklebt ist.

2. Steuer- und Anzeigemodul nach Anspruch 1, **dadurch gekennzeichnet, dass** der gegossene Rahmen (7) ein lichtundurchlässiges thermoplastisches Material aufweist.

3. Steuer- und Anzeigemodul nach einem der Ansprüche 1 oder 2, **dadurch gekennzeichnet, dass** der gegossene Rahmen (7) zwischen den Kanten der kapazitiven berührungsempfindlichen Platte (3) und einem Rand (6) des Steuergehäuses (5) eine abgerundete Wand aufweist.

4. Steuer- und Anzeigemodul nach einem der Ansprüche 1 bis 3, **dadurch gekennzeichnet, dass** die Mittel zum Befestigen des gegossenen Rahmens (7) ablösbar sind.

5. Steuer- und Anzeigemodul nach den Ansprüchen 3 und 4, **dadurch gekennzeichnet, dass** sich die abgerundete Wand des gegossenen Rahmens (7) über wenigstens zwei elastische Laschen (11a, 11b, 11c, 11d) erstreckt, die in entsprechenden Löchern (12a, 12b, 12c, 12d) des Steuergehäuses (5) einrasten.

6. Steuer- und Anzeigemodul nach Anspruch 4, **dadurch gekennzeichnet, dass** der gegossene Rahmen (7) eine Gewindeoberfläche aufweist, die in einen komplementären Schraubengang des Steuergehäuses (5) eingesetzt werden kann.

7. Steuer- und Anzeigemodul nach einem der vorhergehenden Ansprüche, **dadurch gekennzeichnet, dass** es zwischen der lichtdurchlässigen Scheibe (8) und der kapazitiven berührungsempfindlichen Platte (3) einen Klebstoff aus dielektrischem Material aufweist.

8. Steuer- und Anzeigemodul nach einem der vorhergehenden Ansprüche, **dadurch gekennzeichnet, dass** die lichtdurchlässige Scheibe (8) ein Polycarbonatmaterial enthält.

9. Steuer- und Anzeigemodul nach einem der vorhergehenden Ansprüche, **dadurch gekennzeichnet, dass** es einen Lack aufweist, der der lichtdurchlässigen Scheibe (8) überlagert ist.

10. Verfahren zum Herstellen eines Steuer- und Anzeigemoduls nach einem der vorhergehenden Ansprüche, **dadurch gekennzeichnet, dass**:
- der gegossene Rahmen mit einer lichtdurchlässigen Scheibe (Schritt 102) übergossen wird,
- die kapazitive berührungsempfindliche Platte hinter die lichtdurchlässige Scheibe geklebt wird (Schritt 104) und
- die Gesamtheit, die den gegossenen Rahmen, die über den gegossenen Rahmen gegossene lichtdurchlässige Scheibe und die kapazitive berührungsempfindliche Platte, die hinter die lichtdurchlässige Scheibe geklebt wird, in dem Steuergehäuse befestigt wird (Schritt 105).

## Claims

1. Control and display module for a motor vehicle comprising:
- a screen (2) for displaying data,
- a capacitive touch pad (3) for the input of commands by a user, said capacitive touch pad superposing said screen (2),
- a control front panel (5) in which said screen (2) is housed,
**characterized in that** it further comprises a moulded frame (7) peripheral to said capacitive touch pad (3), having means for fixing to said control front panel (5) and **in that** said moulded frame (7) is overmoulded with a transparent window (8), said capacitive touch pad (3) being glued behind said transparent window (8).

2. Control and display module according to Claim 1, **characterized in that** said moulded frame (7) comprises an opaque thermoplastic material.

3. Control and display module according to one of Claims 1 or 2, **characterized in that** said moulded frame (7) has a rounded wall between the edges of the capacitive touch pad (3) and a rim (6) of the control front panel (5).

4. Control and display module according to one of Claims 1 to 3, **characterized in that** the means for fixing the moulded frame (7) are removable.

5. Control and display module according to Claims 3 and 4, **characterized in that** said rounded wall of the moulded frame (7) is extended by at least two elastic tabs (11a, 11b, 11c, 11d) that can be snap-fitted into corresponding holes (12a, 12b, 12c, 12d) of the control front panel (5).

6. Control and display module according to Claim 4, **characterized in that** said moulded frame (7) has a threaded surface that is inserted into a complementary screw thread of the control front panel (5).

7. Control and display module according to one of the preceding claims, **characterized in that** it comprises a glue of dielectric material between the transparent window (8) and the capacitive touch pad (3).

8. Control and display module according to one of the preceding claims, **characterized in that** the transparent window (8) comprises a polycarbonate material.

9. Control and display module according to one of the preceding claims, **characterized in that** it comprises a lacquer superposed on the transparent window (8).

10. Method for manufacturing a control and display module according to one of the preceding claims, **characterized in that**:
- the moulded frame is overmoulded with a transparent window (step 102),
- said capacitive touch pad is glued behind the transparent window (step 104), and
- the assembly comprising the moulded frame, the transparent window overmoulded on the moulded frame and the capacitive touch pad glued behind the transparent window is fixed in the control front panel (step 105).
